Europäisches Patentamt

European Patent Office

Office européen des brevets

(11) Veröffentlichungsnummer: **0 143 920**
**B1**

(12) # EUROPÄISCHE PATENTSCHRIFT

(45) Veröffentlichungstag der Patentschrift:
24.05.89

(51) Int. Cl.⁴: **H 04 L 25/40, H 04 L 7/02**

(21) Anmeldenummer: **84110824.4**

(22) Anmeldetag: **11.09.84**

(54) Empfangseinrichtung für eine bitserielle, asynchrone Übertragungsstrecke für hohe Datenraten.

(30) Priorität: **29.09.83 DE 3335417**

(43) Veröffentlichungstag der Anmeldung:
**12.06.85 Patentblatt 85/24**

(45) Bekanntmachung des Hinweises auf die Patenterteilung:
**24.05.89 Patentblatt 89/21**

(84) Benannte Vertragsstaaten:
**AT DE FR GB IT**

(56) Entgegenhaltungen:
**US-A- 3 992 581**
**US-A- 4 288 874**

**PATENTS ABSTRACTS OF JAPAN, Band 4, Nr. 36 (E-3) [518], 26. März 1980, Seite 57E3; & JP - A - 55 008 103 APPLICATION INFORMATION, Nr. 532, 21. Juni 1971, Seiten 1-26, Eindhoven, NL; A.A. OPHORST: "Data transmission system using 30-series high noise immunity logic modules"**

(73) Patentinhaber: **Siemens Aktiengesellschaft Berlin und München, Wittelsbacherplatz 2, D-8000 München 2 (DE)**

(72) Erfinder: **Wahr, Alfons, Dipl.-Inf., Pucher Strasse 52, D-8080 Fürstenfeldbruck (DE)**
Erfinder: **Breintner, Richard, Dipl.-Ing., Isenstrasse 23, D-8261 Ampfing (DE)**
Erfinder: **Grossmann, Hein-Peter, Brandweg 5, D-8024 Deisenhofen (DE)**
Erfinder: **Stock, Peter, Neublberger Strasse 65, D-8000 München 83 (DE)**
Erfinder: **Thinschmidt, Hans, Kreulingerstrasse 52 c, D-8034 Germering (DE)**

## Beschreibung

Die vorliegende Erfindung betrifft eine Empfangseinrichtung für eine bitserielle, asynchrone Übertragungsstrecke für hohe Datenraten zum Zwecke einer Datenübertragung zwischen einer Datenquelle und einer Datensenke, vorzugsweise jeweils einem Rechner, mit einer Sendeeinrichtung und der Empfangseinrichtung, wobei in der Sendeeinrichtung eine Parallel/Seriell-Umsetzung und in der Empfangseinrichtung eine Seriell/Parallel-Umsetzung erfolgt.

Übertragungsstrecken mit Datenraten über 1–2 Mbit/s werden bisher mit synchronen Prozeduren betrieben, da die bei asynchronen Prozeduren notwendigen hohen Abtastfrequenzen (16× bzw. 64× die Übertragungsfrequenz) in herkömmlichen Empfängerschaltungen für TTL-Bausteine eine technologische Barriere darstellen.

Der vorliegenden Erfindung liegt die Aufgabe zugrunde, eine Empfangseinrichtung für eine bitserielle, asynchrone Übertragungsstrecke für hohe Datenraten zum Zwecke einer Datenübertragung der eingangs genannten Art zu schaffen, die mit üblichen TTL-Schaltkreisen realisiert werden kann und für Übertragungsraten einsetzbar ist.

Die der Erfindung zugrundeliegende Aufgabe wird durch eine Empfangseinrichtung für eine bitserielle, asynchrone Übertragungsstrecke gemäß dem Oberbegriff des Patentanspruchs 1 gelöst, die durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand einer ein bevorzugtes Ausführungsbeispiel für die Erfindung betreffenden Figur im einzelnen beschrieben.

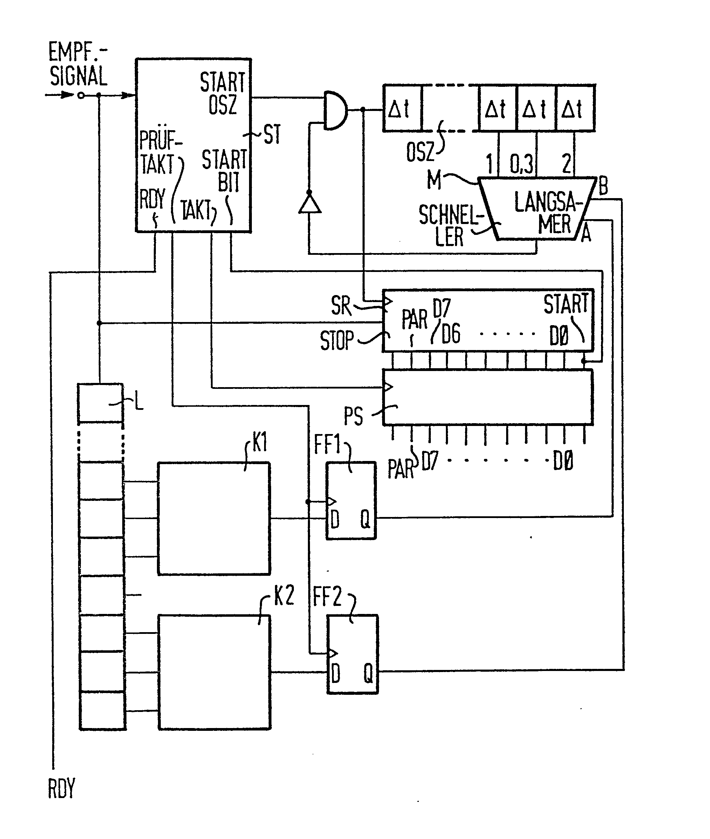

Die Figur zeigt die Struktur eines bevorzugten Ausführungsbeispiels für eine Schaltungsanordnung gemäß der Erfindung.

Ein Empfangssignal läuft in eine Steuereinrichtung ST, die ihrerseits einen Oszillator OSZ startet. Dieser läuft mit einer Periodendauer von ungefähr T, also in etwa der Übertragungsfrequenz. Der Oszillator OSZ ist jedoch steuerbar; er kann in seiner Frequenz um $+/-\Delta t$ verändert werden. Das Empfangssignal wird zusätzlich durch eine Laufzeitkette L geschickt. Hier wird überwacht, ob bei Signalwechsel die Flanke zur richtigen Zeit eingetroffen ist. Im Abweichungsfall wird dies durch zwei Komparatoren K1, K2 festgestellt und in zwei Flip-Flops FF1, FF2 gespeichert. Bei der nächsten Oszillatorschwingung wird die Periodendauer T entsprechend um $+/-\Delta t$ korrigiert. Parallel hierzu wird das Empfangssignal mit dem Oszillatortakt in ein Schieberegister SR eingetaktet. Nach der Zeichenübertragung wird das Zeichen bitparallel am Ausgang eines Pufferspeichers PS angeboten. Dies wird dem anzuschließenden System durch einen RDY-Puls angezeigt.

Der Oszillator OSZ ist vorteilhaft als eine Laufzeitkette realisiert.

Der Vorteil der erfindungsgemäßen Empfangseinrichtung besteht darin, daß Toleranzen der Oszillatorfrequenz, der Eingangssignalfrequenz und der Übertragungseinrichtungen kompensiert werden können.

Die Schaltungselemente können weitgehend in Schottky-TTL-Schaltkreistechnik, für erhöhte Anforderungen an die Arbeitsgeschwindigkeit in Advanced-Schottky-TTL-Schaltkreistechnik, realisiert sein.

## Patentansprüche

1. Empfangseinrichtung für ein bitserielle, asynchrone Übertragungsstrecke für hohe Datenraten zum Zwecke einer Datenübertragung zwischen einer Datenquelle und einer Datensenke, vorzugsweise jeweils einem Rechner, mit einer Sendeeinrichtung und der Empfangseinrichtung, wobei in der Sendeeinrichtung eine Parallel/Seriell-Umsetzung und in der Empfangseinrichtung eine Seriell/Parallel-Umsetzung der Datensignalzeichen erfolgt, dadurch gekennzeichnet, daß eine Steuereinrichtung (ST) vorgesehen ist, der ein Empfangssignal zugeführt wird,

daß ein steuerbarer Oszillator (OSZ) vorgesehen ist, der mittelbar mittels eines Ausgangssignals der Steuereinrichtung (ST) gestartet wird,

daß eine Laufzeitkette (L) vorgesehen ist, der das Empfangssignal zugeführt wird,

daß ein erster Komparator (K1) und ein zweiter Komparator (K2) vorgesehen sind, die jeweils individuell mit Signaleingängen an Signalausgänge der Laufzeitkette (L) angeschlossen sind und überwachen, ob alle Pegel der zugeführten Signalelemente gleich sind oder nicht gleich sind, und für den Fall, daß die Signalpegel nicht gleich sind, entscheiden, daß die Signalimpulsflanke zu spät liegt (im ersten Komparator (K1)) bzw. zu früh liegt (im zweiten Komparator (K2)),

daß ein erstes Flip-Flop (FF1) und ein zweites Flip-Flop (FF2) vorgesehen sind, deren Setzeingänge jeweils mit dem Signalausgang des ersten Komparators (K1) bzw. des zweiten Komparators (K2) verbunden sind, wobei eine Information «Flanke zu spät» bzw. eine Information «Flanke zu früh» gespeichert wird,

daß ein Multiplexer (M) vorgesehen ist, dem die Ausgangssignale der Flip-Flops (FF1, FF2) zugeführt werden, wodurch der Multiplexer (M) so eingestellt wird, daß er die Periodendauer (T) des Oszillators (OSZ) in Stufen von $\Delta t$ in Richtung «größer» bzw. in Richtung «kleiner» korrigiert, und

daß ein Schieberegister (SR) vorgesehen ist, dem ebenfalls das Empfangssignal zugeführt und mittels des Taktes des Oszillators (OSZ) eingetaktet wird, wonach das jeweils in dem Schieberegister (SR) phasenrichtig enthaltene Empfangssignalzeichen über die Signalausgänge des Schieberegisters (SR) bitweise an einen Pufferspeicher (PS) übergeben wird, an dessen Signalausgängen das betreffende Empfangssignalzeichen bitparallel abrufbar ist.

2. Empfangseinrichtung nach Anspruch 1, dadurch gekennzeichnet, daß der Oszillator (OSZ) als eine Laufzeitkette realisiert ist.

3. Empfangseinrichtung nach Anspruch 1, dadurch gekennzeichnet, daß die Schaltungselemente zumindest zum Teil in Schottky-TTL-Schaltkreistechnik realisiert sind.

4. Empfangseinrichtung nach Anspruch 1, dadurch gekennzeichnet, daß die Schaltungselemente zumindest zum Teil in Advanced-Schottky-Schaltkreistechnik realisiert sind.

**Claims**

1. Receiving device for a bit-serial asynchronous transmission link for high data rates for the purpose of a data transmission between a data source and a data sink, preferably in each case a computer, comprising a transmitting device and the receiving device, a parallel/serial conversion occurring in the transmitting device and a serial/parallel conversion of the data signal elements occurring in the receiving device, characterised in that a control device (ST) is provided which is supplied with a received signal, that a controllable oscillator (OSZ) is provided which is indirectly started by means of an output signal of the control device (ST), that a delay line (L) is provided which is supplied with the received signal, that a first comparator (K1) and a second comparator (K2) are provided which are in each case individually connected with signal inputs to signal outputs of the delay line (L) and monitor whether all levels of the signal elements supplied are equal or not equal and, in the case where the signal levels are not equal, decide that the signal pulse edge is too late (in the first comparator (K1) or too early (in the second comparator (K2), that a first flip flop (FF1) and a second flip flop (FF2) are provided, the set inputs of which are in each case connected to the signal output of the first comparator (K1) and of the second comparator (K2), respectively, an information «edge too late» or an information «edge too early» being stored, that a multiplexer (M) is provided which is supplied with the output signals of the flip flops (FF1, FF2) as a result of which the multiplexer (M) is adjusted in such a manner that it corrects the duration of the period (T) of the oscillator (OSZ) in steps of $\Delta t$ in the direction of «longer» or in the direction of «shorter», respectively, and that a shift register (SR) is provided to which the received signal is also supplied and clocked in by means of the clock of the oscillator (OSZ), according to which the received signal element contained in each case in the correct phase in the shift register (SR) is transferred bit by bit via the signal outputs of the shift register (SR) to a buffer store (PS) at the signal outputs of which the relevant received signal element can be called up in bit-parallel mode.

2. Receiving device according to Claim 1, characterised in that the oscillator (OSZ) is implemented as a delay line.

3. Receiving device according to Claim 1, characterised in that the circuit elements are at least partially implemented in Schottky TTL circuit technology.

4. Receiving device according to Claim 1, characterised in that the circuit elements are at least partially implemented in advanced Schottky circuit technology.

**Revendications**

1. Dispositif de réception pour une voie de transmission asynchrone en série par bits, pour des débits élevés de données, en vue d'une transmission de données entre une source de données et un collecteur de données, de préférence respectivement un ordinateur comportant un dispositif d'émission et le dispositif de réception, et dans lequel une conversion parallèle/série des signaux de données est réalisée dans le dispositif d'émission et une conversion série/parallèle des signaux de données est réalisée dans le dispositif de réception, caractérisé par le fait

qu'il est prévu un dispositif de commande (ST), auquel est envoyé un signal de réception,

qu'il est prévu un oscillateur commandable (OSZ), qui est mis en marche indirectement au moyen d'un signal de sortie du dispositif de commande (ST),

qu'il est prévu un circuit de retard (L), auquel est envoyé le signal de réception,

qu'il est prévu un premier comparateur (K1) et un second comparateur (K2), qui sont raccordés respectivement individuellement, par des entrées de signaux, à des sorties de signaux du circuit de retard (L) et vérifient si tous les niveaux des éléments de signal envoyés sont identiques ou non et, dans le cas où les niveaux du signal ne sont pas identiques, décident que le flanc de l'impulsion du signal est en retard (dans le premier comparateur (K1)) ou est en avance (dans le second comparateur (K2)),

qu'il est prévu une première bascule bistable (FF1) et une seconde bascule bistable (FF2), dont les entrées de positionnement sont reliées respectivement à la sortie du signal du premier comparateur (K1) et à la sortie du signal du second comparateur (K2), une information «flanc tardif» ou une information «flanc précoce» étant mémorisée,

qu'il est prévu un multiplexeur (M), auquel sont envoyés les signaux de sortie des bascules bistables (FF1, FF2), ce qui règle le multiplexeur (M) de telle sorte qu'il corrige la durée (T) de la période de l'oscillateur (OSZ) par échelons de $\Delta t$ dans le sens «supérieure» ou dans le sens «inférieure», et

qu'il est prévu un registre à décalage (SR), auquel le signal de réception est également envoyé et est cadencé à l'aide de la cadence de l'oscillateur (OSZ), à la suite de quoi le signal de réception, qui est présent avec une phase correcte respectivement dans le registre à décalage (SR), est retransmis bit-par-bit, par l'intermédiaire des sorties de signaux du registre à décalage (SR), à une mémoire tampon (PS), sur les sorties de signaux de laquelle on peut interroger, en parallèle du point de vue des bits, le signal de réception considéré.

2. Dispositif de réception suivant la revendication 1, caractérisé par le fait que l'oscillateur (OSZ) est réalisé sous la forme d'un circuit de retard.

3. Dispositif de réception suivant la revendication 1, caractérisé par le fait que les éléments de circuit sont réalisés au moins en partie selon la technologie des circuits Schottky-TTL.

4. Dispositif de réception suivant la revendication 1, caractérisé par le fait que les éléments de circuit sont réalisés au moins en partie selon la technique des circuits Advanced-Schottky.